# EUROPÄISCHE PATENTSCHRIFT

(11) **EP 1 036 715 B1**
(45) Veröffentlichungstag und Bekanntmachung des Hinweises auf die Patenterteilung: **09.11.2005**
(21) Anmeldenummer: 00104860.2
(22) Anmeldetag: 07.03.2000
(51) Int. Cl.: B60R 19/18, B60R 19/12

(54) **Stossfängeranordnung**
Bumper arrangement
Ensemble pare-chocs

(30) Priorität: 18.03.1999 DE 19912272
(43) Veröffentlichungstag der Anmeldung: 20.09.2000
(73) Patentinhaber: BENTELER AG, D-33104 Paderborn (DE)
(72) Erfinder: Gehringhoff, Ludger, 33104 Paderborn (DE); Härtel, Wulf, 32760 Detmold (DE); Schöne, Knut, 59556 Lippstadt (DE); Schmidt, Ralf, 59302 Oelde (DE); Braun, Dieter, 33378 Rheda-Wiedenbrück (DE)
(74) Vertreter: Bockermann, Rolf

(56) Entgegenhaltungen:
- EP-A- 0 546 352
- EP-A- 0 839 690
- DE-A- 19 700 022
- DE-A- 19 806 541
- FR-A- 2 410 184
- GB-A- 2 033 535
- GB-A- 2 328 654
- US-A- 3 897 095
- US-A- 4 830 416
- US-A- 5 154 462
- US-A- 5 722 708
- US-A- 5 732 801
- US-A- 5 803 514
- PATENT ABSTRACTS OF JAPAN vol. 008, no. 090 (M-292), 25. April 1984 (1984-04-25) & JP 59 006151 A (NISSAN JIDOSHA KK), 13. Januar 1984 (1984-01-13)

## Beschreibung

Im Umfang der DE 196 11 934 C1 ist eine Stoßfängeranordnung für das Frontmodul eines Personenkraftwagens (PKW) bekannt, die zwei übereinander liegende Querträger aufweist. Während der obere Querträger direkt mit oberen Längsträgern der Karosserie des PKW's verbunden ist, sind bei dem unteren Querträger Aufpralldämpfer zwischen untere Längsträger der Karosserie und den Querträger eingegliedert. Außerdem sind die beiden Querträger durch im Bereich der Aufpralldämpfer angeordnete, zueinander V-förmig gestellte Zug- und Druckstreben miteinander verbunden. Die Druckstreben erstrecken sich von dem oberen Querträger aus zu den mit den unteren Längsträgern verbundenen Abschnitten der Aufpralldämpfer, während die Zugstreben vom oberen Querträger aus zu den mit dem unteren Querträger verbundenen Abschnitten der Aufpralldämpfer verlaufen. Ferner sind die von ihrer Widerstandsfähigkeit her schwächer ausgebildeten Zugstreben mit Sollbiegestellen versehen, welche die Aufgabe haben, bei einem Aufprall möglichst keine Belastungen auf die obere Trägerebene zuzulassen.

Im bekannten Fall sollen die beiden Querträger einen biegesteifen Rahmenverbund bilden. Bei einem Unterfahr-Aufprall entsteht eine Druckbelastung auf den oberen Querträger, welche durch die Druckstreben auf die relativ biegesteife untere Trägerebene übertragen und von dieser abgefangen wird. Gleichzeitig erfolgt eine Biegebelastung auf die Anbindungspunkte der Druckstreben aufgrund der in Richtung der Fahrzeuglängsachse wirkenden Kraftkomponente. Durch die Eingliederung der Zugstreben werden diese Anbindungspunkte entlastet. Die Zugstreben belasten im wesentlichen nur die untere Trägerebene. Mit einer derartigen Anordnung soll ein Frontmodul geschaffen werden, welches eine hohe Stabilität bei Unfällen aufweist, reparaturfreundlich ist und ein optimales Aufprallverhalten sowohl bei einem Unterfahr- als auch bei einem Hochgeschwindigkeits-Aufprall besitzt.

Der Erfindung liegt ausgehend vom Stand der Technik die Aufgabe zugrunde, eine Stoßfängeranordnung für den durch eine Verschalung verkleideten Front- oder Heckbereich der Karosserie eines Personenkraftwagens zu schaffen, welche sowohl bei einem Crash auf niedrigem Kraftniveau bei niedriger Geschwindigkeit als auch bei einem Crash auf hohem Kraftniveau mit hoher Geschwindigkeit mit einer großen Masse ihre Funktion erfüllt.

Die Lösung dieser Aufgabe besteht nach der Erfindung in den Merkmalen des Anspruchs 1.

Querträger, Querholm, Distanzkonsolen und Distanzstreben sind im Rahmen der Erfindung als ein auf die gestellten Anforderungen ganzheitlich bezogenes System zu betrachten. Auf diese Weise kann gezielt dem jeweiligen Crashfall entsprochen werden. Dies ist zum einen der Crash auf niedrigem Kraftniveau bei niedriger Geschwindigkeit. Dies kann der Impact mit einer geringen oder großen Masse sein. Zum anderen wird der Crash bei hohem Kraftniveau mit hoher Geschwindigkeit und mit einer großen Masse berücksichtigt.

Durch den zusätzlichen Querholm unterhalb des Querträgers ist es möglich, einer zusätzlichen Energieaufnahme bei einem Front- oder bei einem Rearcrash Rechnung zu tragen. Neben der zusätzlichen Energieaufnahme wird ein weiterer positiver Effekt dieser Anordnung darin gesehen, dass ein Hindernis wesentlich flächiger getroffen wird. Das heißt, die Art des Impacts ändert sich. Des Weiteren erfolgt jetzt eine Energieumwandlung auf mindestens zwei unterschiedlichen Kraftniveaus. Hierbei ist jedes Kraftniveau einer bestimmten Crashsituation angepasst. Insbesondere ist es ohne weiteres möglich, alle Bestandteile der Stoßfängeranordnung differenziert in Funktion, Material und Position zu gestalten und hierbei die passiven und aktiven Komponenten zur Fahrzeugsicherheit hinsichtlich ihrer Funktionserfüllung und Anforderungen zu optimieren.

Die Deformationsbereiche am Querträger und/oder an den Distanzkonsolen können in verschiedenster Weise ausgeführt sein. Das Material der Deformationsbereiche kann metallisch oder nichtmetallisch sein. Denkbar ist auch eine Verbundbauweise. Hierbei können Aluminium, Stahl, Kunststoff, Magnesium oder auch Schäume zur Anwendung gelangen. Ferner ist eine Hybridgestaltung vorstellbar.

Insgesamt wird ein Front- oder Heckmodul bereit gestellt, das als Ganzes in die Karosserie eines PKW's integriert und bei Bedarf komplett oder in Einzelteilen ausgetauscht werden kann.

Der unterhalb des Querträgers vorgesehene Querholm kann nach Anspruch 2 rohrförmig ausgebildet sein. Der Querholm kann dabei einen runden, rechteckigen oder dreieckigen Querschnitt aufweisen.

Denkbar ist gemäß Anspruch 3 aber auch eine Ausführungsform, bei welcher der Querholm als Profildesign gestaltet ist. Als Profildesign kann insbesondere ein hutförmiges Profil mit einem Steg, zwei Schenkeln und zwei Flanschen zum Einsatz gelangen.

Unabhängig davon, ob nun der Querholm rohrförmig oder als Profildesign ausgebildet ist, können hierfür Stähle, hochfeste Stähle, Aluminium, Kunststoffe oder Verbundmaterialien zur Anwendung gelangen.

Um im Bereich des Querholms weitere Energieabsorptionen zu erlauben, kann es entsprechend den Merkmalen des Anspruchs 4 sinnvoll sein, den Querholm mindestens an den der Verschalung zugewandten Oberflächenbereichen mit einer Schicht aus einem Energie absorbierenden Material zu versehen. Als ein solches Material kann beispielsweise ein reversibler oder irreversibler Schaum in Form von Polyurethan (PUR), Aluminium, Epoxidharz (EP) usw. zur Anwendung gelangen.

Hat der Querholm einen runden Querschnitt, wird die Schicht bevorzugt über den gesamten Umfang vorgesehen. Bei anderen Querschnitten oder einem Querholm in Form eines Profildesigns, beispielsweise eines hutförmigen Querschnitts, wird zweckmäßig lediglich auf der der Verschalung zugewandten Außenseite eine Schicht aus einem Energie absorbierenden Material angeordnet.

Die zwischen dem Querholm und den Anschlagplatten vorgesehenen Distanzstreben sind nach Anspruch 5 vorteilhaft als Profildesign gestaltet. Insbesondere gelangt ein im Querschnitt hutförmiges Profil zum Einsatz. Dadurch kann die Wanddicke der Distanzstreben vergleichsweise dünn gehalten werden.

Die Distanzstreben können gemäß Anspruch 6 aber auch als Hohlprofile ausgebildet sein. Denkbar sind rechteckige, dreieckige oder runde Querschnitte.

Wie einleitend bereits zum Ausdruck gebracht, können der Querträger und/oder die Distanzkonsolen mindestens bereichsweise in wenigstens zwei in Fahrzeuglängsrichtung hintereinander liegende Deformationsbereiche mit unterschiedlichen Kraftniveaus gegliedert sein. Im Rahmen der Ausführungsform des Anspruchs 7 sind die Deformationsbereiche mit dem niedrigen Kraftniveau den aus einem rechteckigen, dreieckigen oder runden Hohlprofil bestehenden Distanzkonsolen zugeordnet. Die Deformationsbereiche sind bei dieser Ausführungsform durch Wellung der Wände der Distanzkonsolen gebildet. Hierbei kann die grundlegende Gestaltung der Wellung unmittelbar dem jeweiligen Kraftfahrzeugtyp angepasst sein.

Entsprechend den Merkmalen des Anspruchs 8 ist es bei aus Hohlprofilen an sich beliebigen Querschnitts bestehenden Distanzkonsolen aber auch möglich, die Deformationsbereiche mit dem niedrigen Kraftniveau durch eine bereichsweise Reduzierung der Dicke der Wände der Distanzkonsolen zu bilden.

Nach Anspruch 9 ist es darüberhinaus vorstellbar, dass die Deformationsbereiche mit niedrigem Kraftniveau dadurch gebildet werden, dass in den Wänden der Distanzkonsolen Durchbrechungen vorgesehen sind.

Im Umfang der Merkmale des Anspruchs 10 kann eine Ausführungsform realisiert werden, bei welcher die Distanzkonsolen ebenfalls aus Hohlprofilen beliebigen Querschnitts bestehen, wobei die Deformationsbereiche mit dem niedrigen Kraftniveau durch Schaumkörper gebildet sind. Das Kraftniveau kann hierbei optimal über die Dicke der Schaumkörper eingestellt werden. Es können reversible bzw. irreversible Schäume zum Einsatz gelangen.

Gemäß Anspruch 11 sind die Deformationsbereiche der Distanzkonsolen mit dem niedrigen Kraftniveau benachbart zum Querträger vorgesehen. Die Lage nahe am Querträger erhöht und optimiert die Seitensteifigkeit der Distanzkonsolen.

Denkbar ist aber auch eine Ausführungsform, bei welcher entsprechend Anspruch 12 die Deformationsbereiche der Distanzkonsolen mit dem niedrigen Kraftniveau benachbart zu den Anschlagplatten vorgesehen sind.

Ein U-förmiger Querträger mit einer in dem der Verschalung zugewandten Steg vorgesehenen Längssicke (Anspruch 13) gelangt insbesondere dann zur Anwendung, wenn die Deformationsbereiche mit dem niedrigen Kraftniveau in die Distanzkonsolen integriert sind.

Im Falle der Ausführungsform des Anspruchs 14 ist am Querträger ein Deformationsbereich mit dem niedrigen Kraftniveau vorgesehen. Dazu ist der Querträger U-förmig ausgebildet. Seine Schenkel weisen in Richtung zur Verschalung. Die Schenkel können endseitig mit Flanschen ausgerüstet sein. In den durch den Steg und die Schenkel gebildeten Kanal des Querträgers ist ein leistenartiger Schaumkörper eingebettet, der in Richtung zur Verschalung vorsteht und insbesondere an der Innenseite der Verschalung zur Anlage gelangt. Auch hierbei sind reversible oder irreversible Schäume möglich. Der Querschnittsbereich des Kanals kann hierbei vorteilhaft als Kompressionsraum genutzt werden.

Die Ausführungsform des Anspruchs 15 sieht einen rohrförmigen Querträger vor. Insbesondere handelt es sich um einen im Querschnitt rechteckigen Querträger, dessen längere Achse vertikal verläuft. In der der Verschalung zugewandten Längswand des Querträgers sind im Abstand nebeneinander Ausnehmungen vorgesehen. In diese Ausnehmungen werden Schaumblöcke eingesetzt, die sich an der Innenseite der der Seitenwand mit den Ausnehmungen gegenüberliegenden Seitenwand abstützen. Die Schaumblöcke stehen über den Querträger in Richtung zur Verschalung vor. Sie kommen insbesondere an der Innenseite der Verschalung zur Anlage. Bevorzugt haben die Schaumblöcke einen rechteckigen Querschnitt, so dass sie verdrehungssicher gelagert sind. Ihre Funktion ist erfüllt, wenn bei einem Crash die Schaumblöcke vollständig in das Rohrdesign gepresst sind.

Auch bei der Ausführungsform gemäß Anspruch 16 ist der Querträger in zwei auf unterschiedlichen Kraftniveaus liegende Deformationsbereiche gegliedert. Dazu besteht der Querträger aus zwei U-Profilen. Das der Verschalung abgewandte innere U-Profil hat bevorzugt noch zwei von den Schenkeln in entgegengesetzte Richtungen abstehende Flansche. Das äußere U-Profil ist mit seinen Schenkeln an das innere Profil gefügt. Es können Schweiß- oder Klebeverbindungen sein. Auch andere Verbindungen sind denkbar. Die beiden Stege der U-Profile liegen im Abstand voneinander. Das der Verschalung benachbarte U-Profil ist über die Wanddicke und/oder die Materialgüte hinsichtlich des Kraftniveaus schwächer gestaltet. Im Falle eines Impacts wird zunächst dieses U-Profil elastisch und/oder plastisch verformt. Hält der Impact weiter an, bilden beide U-Profile gemeinsam einen Widerstand für einen Crash auf einem höheren Kraftniveau.

Gemäß der Ausführungsform des Anspruchs 17 ist der Querträger wiederum mit auf unterschiedlichen Kraftniveaus liegenden Deformationsbereichen versehen. Er besteht hierbei aus zwei mit ihren Schenkeln gegeneinander gerichteten U-Profilen. Vorteilhaft weisen beide U-Profile an den Schenkeln Flansche auf, über die die U-Profile miteinander gefügt sind. Auch hierbei wird das der Verschalung benachbarte U-Profil über die Wanddicke und/oder die Materialgüte hinsichtlich des Kraftniveaus schwächer gestaltet.

Die Erfindung ist nachfolgend anhand von in den Zeichnungen dargestellten Ausführungsbeispielen näher erläutert. Es zeigen:
- Figur 1: in der Perspektive eine Stoßfängeranordnung für den Frontbereich eines Personenkraftwagens;
- Figur 2: im Schema in vergrößerter Darstellung einen Vertikalschnitt durch die Figur 1 entlang der Linie II-II mit drei weiteren Varianten;
- Figur 3: eine Darstellung entsprechend derjenigen der Figur 2 gemäß einer fünften Ausführungsform;
- Figur 4: eine Darstellung entsprechend derjenigen der Figur 2 gemäß einer sechsten Ausführungsform;
- Figur 5: im Schema eine Darstellung entsprechend derjenigen der Figur 2 gemäß einer siebten Ausführungsform;
- Figur 6: eine Darstellung entsprechend derjenigen der Figur 2 gemäß einer achten Ausführungsform;
- Figur 7: eine Darstellung entsprechend derjenigen der Figur 2 gemäß einer neunten Ausführungsform;
- Figur 8: eine Darstellung entsprechend derjenigen der Figur 2 gemäß einer zehnten Ausführungsform und
- Figur 9: eine Darstellung entsprechend derjenigen der Figur 2 gemäß einer elften Ausführungsform.

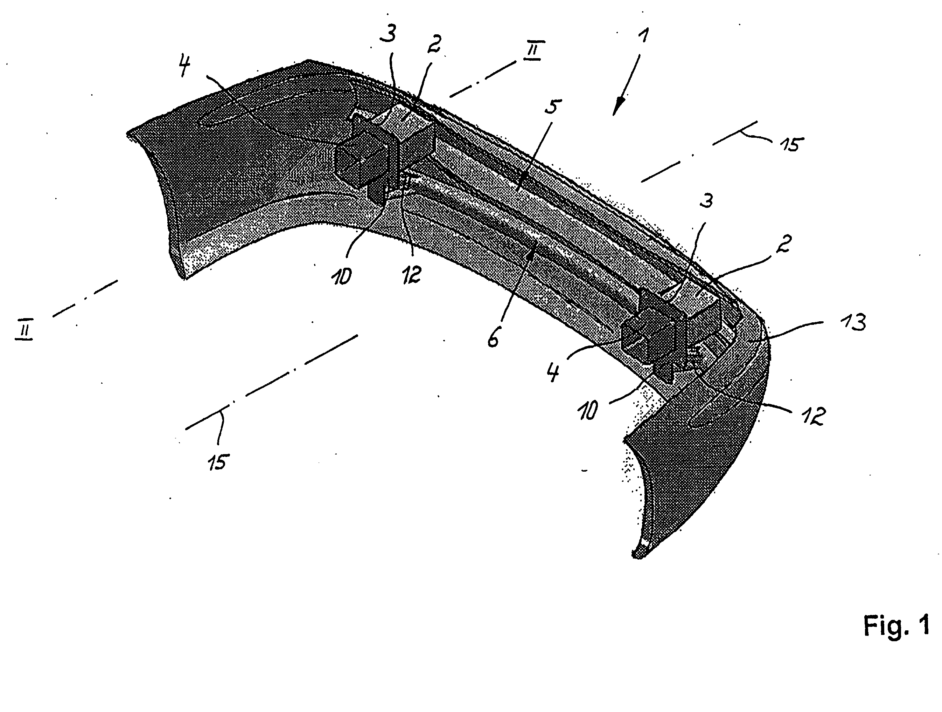

Mit 1 ist in der Figur 1 eine Stoßfängeranordnung für den Frontbereich der ansonsten nicht näher veranschaulichten Karosserie eines Personenkraftwagens (PKW) bezeichnet.

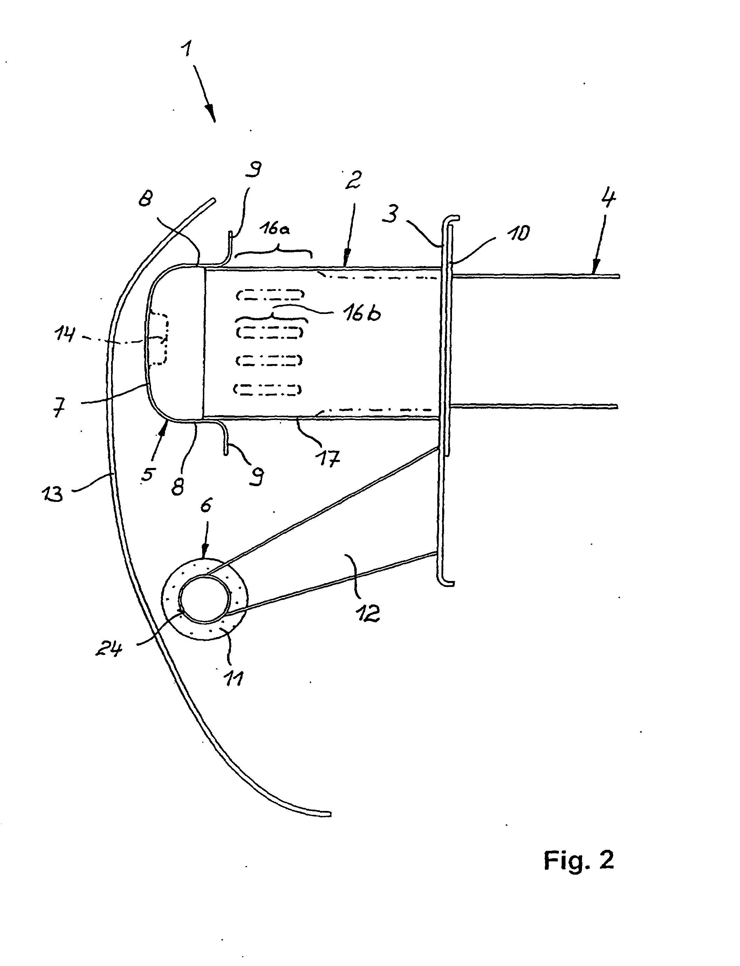

Die Stoßfängeranordnung 1 umfasst, wie auch die Figur 2 erkennen lässt, einen endseitig über aus rechteckigen Hohlprofilen bestehenden Distanzkonsolen 2 und Anschlagplatten 3 mit den Längsträgern 4 der Karosserie verbundenen Querträger 5 sowie einen unterhalb des Querträgers 5 vorgesehenen Querholm 6.

Der Querträger 5 ist im wesentlichen U-förmig gestaltet. Er weist einen Steg 7, zwei Schenkel 8 sowie zwei Flansche 9 auf. Die Distanzkonsolen 2 sind mit dem Querträger 5 verschweißt. Andererseits ist jede Distanzkonsole 2 mit einer Anschlagplatte 3 verschweißt, die wiederum mit einer Anschlagplatte 10 lösbar verbunden ist, welche stirnseitig jedes Längsträgers 4 angeschweißt ist.

Der Querholm 6 unterhalb des Querträgers 5 ist rohrförmig ausgebildet. Er besitzt auf seiner Oberfläche 24 eine umfangsseitige Schicht 11 aus einem Energie absorbierenden Material, wie z.B. Schaum.

Der Querholm 6 ist unterhalb der Distanzkonsolen 2 über schräg verlaufende Distanzstreben 12 mit den Anschlagplatten 3 verbunden. Die Distanzstreben 12 können als Profildesign, wie beispielsweise U- oder Hutprofile, ausgebildet sein. Denkbar sind aber auch Hohlprofile beliebiger Querschnittsform als Distanzstreben 12.

Vor dem Querträger 5 und dem Querholm 6 erstreckt sich in U-förmiger Konfiguration (Figur 1) eine Verschalung 13 aus Kunststoff.

Wie in der Figur 2 in strichpunktierter Linienführung angedeutet, kann der der Verschalung 13 zugewandte Steg 7 des Querträgers 5 mit einer Längssicke 14 versehen sein.

Der Querträger 5 und/oder die Distanzkonsolen 2 können mindestens bereichsweise in wenigstens zwei in Fahrzeuglängsrichtung 15 hintereinander liegende Deformationsbereiche mit unterschiedlichen Kraftniveaus gegliedert sein.

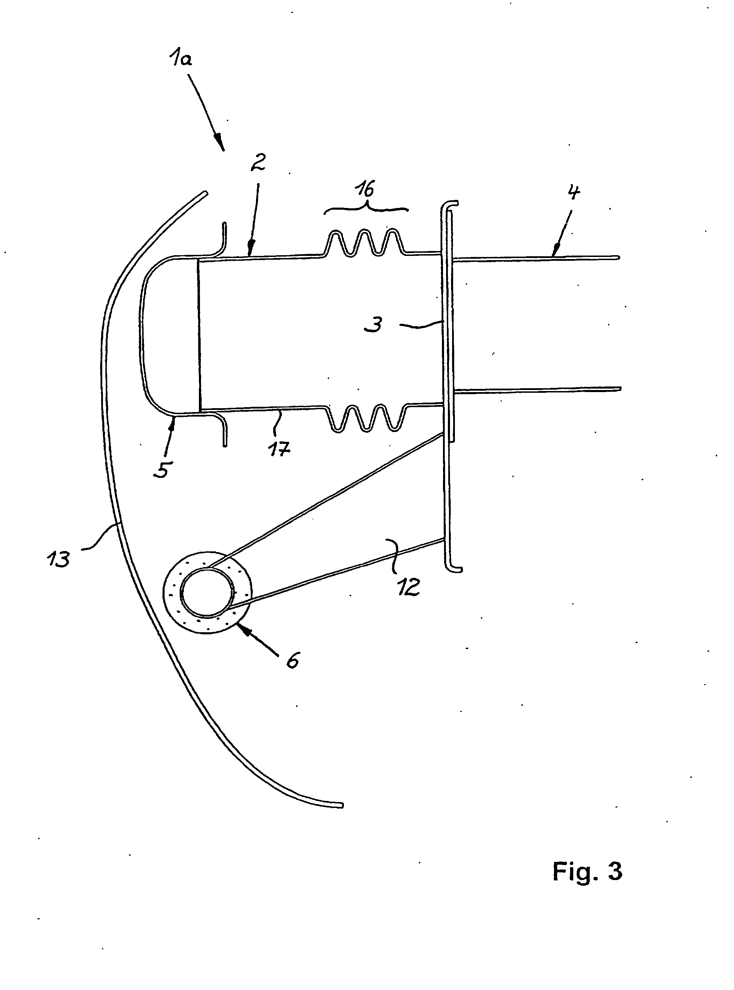

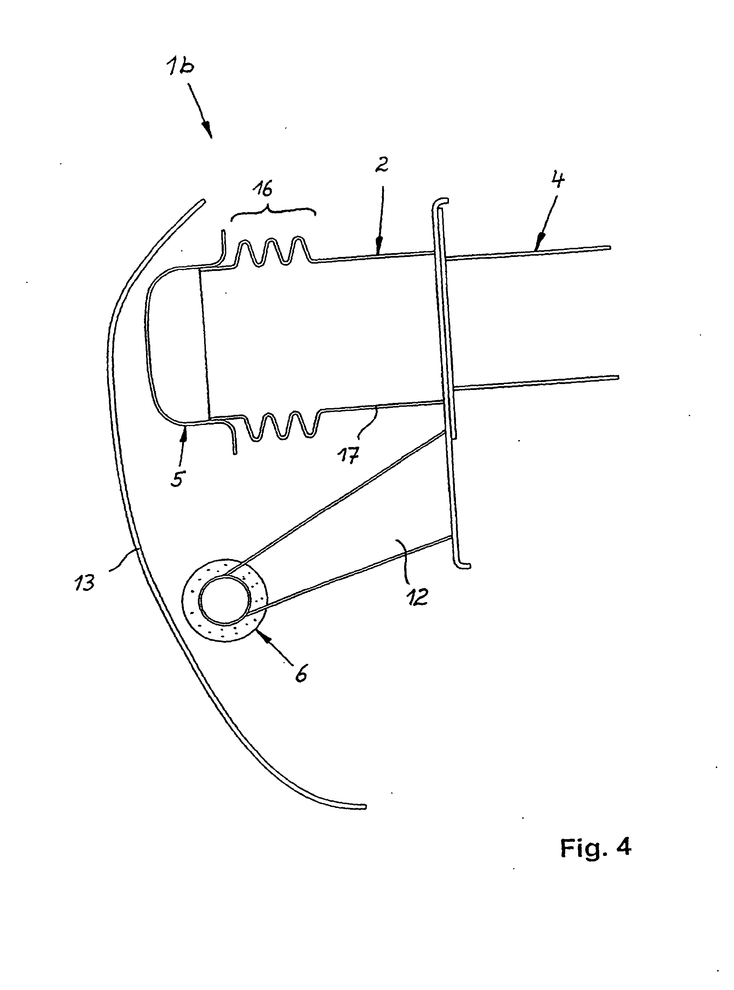

Diesbezüglich sehen die Stoßfängeranordnungen 1a und 1b der Figuren 3 und 4 vor, dass die Distanzkonsolen 2 aus Hohlprofilen bestehen und die Deformationsbereiche 16 mit dem niedrigen Kraftniveau durch Wellung der Wände 17 der Distanzkonsolen 2 gebildet sind.

Dabei ist es möglich, dass die Deformationsbereiche 16 der Distanzkonsolen 2 mit dem niedrigen Kraftniveau gemäß Figur 3 benachbart zu den Anschlagplatten 3 oder gemäß der Darstellung der Figur 4 benachbart zum Querträger 5 vorgesehen sind.

Wie in der Figur 2 in strichpunktierter Linienführung noch angedeutet, können bei den Distanzkonsolen 2 aus Hohlprofilen die Deformationsbereiche 16a mit dem niedrigen Kraftniveau aber auch durch eine Reduzierung der Dicke der Wände 17 der Distanzkonsolen 2 gebildet sein.

Diese Deformationsbereiche 16a können dann ebenfalls wie bei den Darstellungen der Figuren 3 und 4 entweder den Anschlagplatten 3 oder dem Querträger 5 benachbart sein.

Ferner ist eine Ausführungsform denkbar, die ebenfalls in der Figur 2 in strichpunktierter Linienführung angedeutet ist und bei welcher die Deformationsbereiche 16b durch eine partielle Schwächung der Wände 17 der Distanzkonsolen 2 gebildet sind. Dies kann beispielsweise durch Langlöcher geschehen. Diese können benachbart des Querträgers 5 oder benachbart der Anschlagplatten 3 vorgesehen sein.

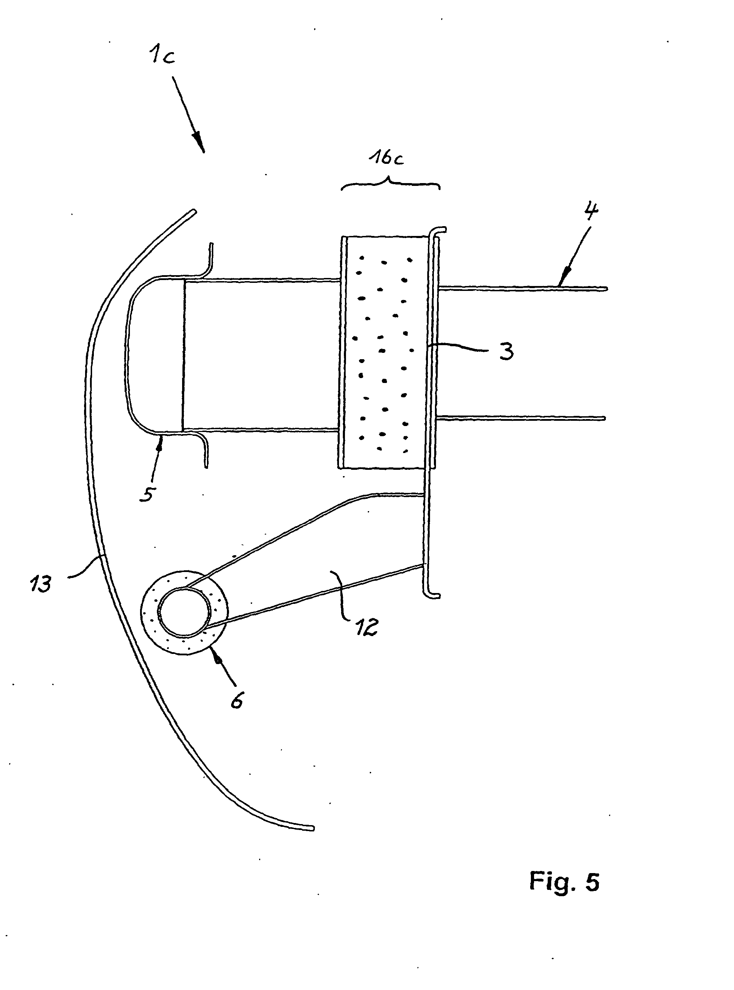

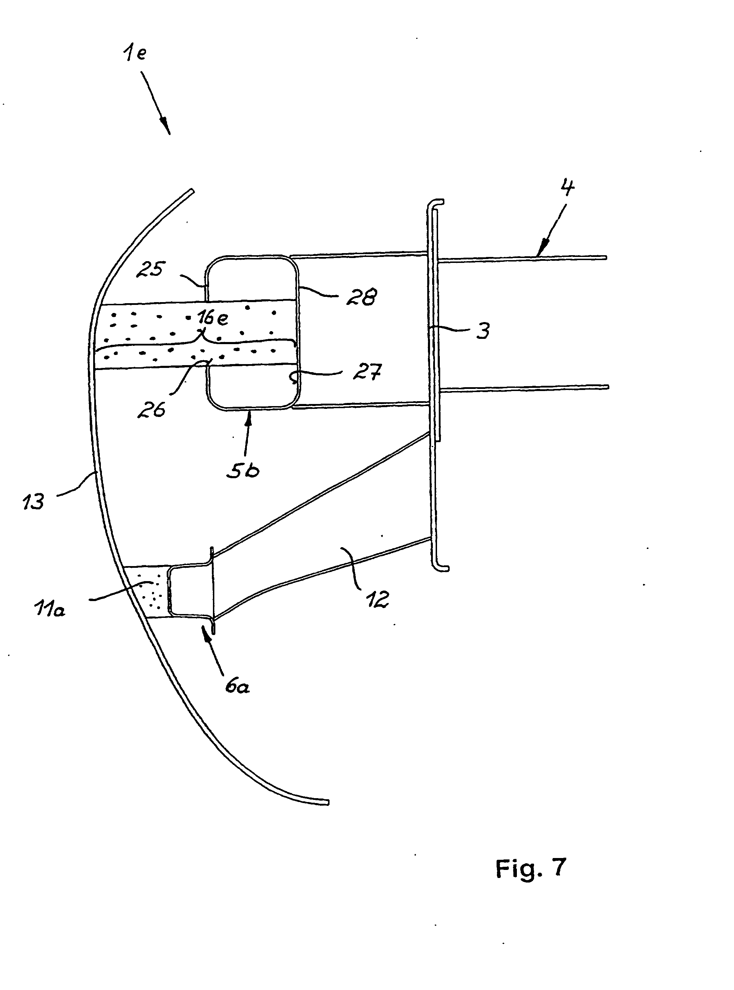

Die Figur 5 zeigt eine Stoßfängeranordnung 1c, bei weicher die Deformationsbereiche 16c mit dem niedrigen Kraftniveau durch plattenartige Schaumkörper gebildet sind. Auch diese Deformationsbereiche 16c können entweder, wie in der Figur 5 dargestellt, benachbart zu den Anschlagplatten 3 oder gemäß Figur 4 benachbart zu dem Querträger 5 angeordnet sein.

Auch die Querträger 5 gemäß den Figuren 3 bis 5 können mit Längssicken 14 entsprechend Figur 2 versehen sein.

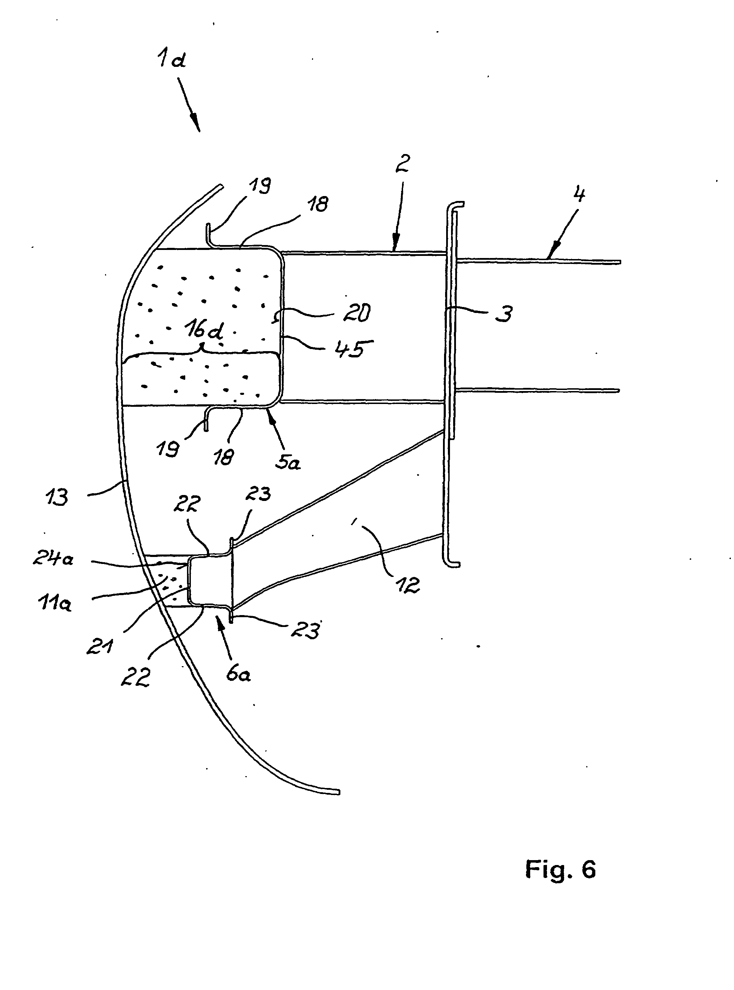

Die aus der Figur 6 erkennbare Stoßfängeranordnung 1d zeigt einen Querträger 5a mit einem U-förmigen Querschnitt, dessen Schenkel 18 vom Steg 45 aus in Richtung zur Verschalung 13 weisen. An die Schenkel 18 sind noch Flansche 19 angeformt. Der Deformationsbereich 16d mit dem niedrigen Kraftniveau ist hierbei durch einen in dem Kanal 20 des Querträgers 5a gehaltenen, über die Schenkel 18 zur Verschalung 13 vorstehenden leistenartigen Schaumkörper gebildet.

Des Weiteren ist erkennbar, dass bei der Stoßfängeranordnung 1d der Figur 6 der unterhalb des Querträgers 5a liegende Querholm 6a aus einem U-Profil mit Steg 21, Schenkeln 22 und Flanschen 23 gebildet ist. Auch dieser Querholm 6a ist über unterhalb der aus Hohlprofilen bestehenden Distanzkonsolen 2 liegende Distanzstreben 12 mit den Anschlagplatten 3 verbunden. Diese Distanzstreben 12 können ebenfalls aus im Querschnitt beliebigen Hohlprofilen oder auch aus U- oder Hutprofilen bestehen.

Außerdem lässt die Figur 6 erkennen, dass der hutförmige Querholm 6a an der der Verschalung 13 zugewandten Oberfläche 24a mit einer Schicht 11a aus einem Energie absorbierenden Material, wie Schaum versehen ist. Sowohl der aus einem leistenartigen Schaumkörper bestehende Deformationsbereich 16d am Querträger 5a als auch die Schaumschicht 11a am Querholm 6a stehen mit der Verschalung 13 innenseitig in Kontakt.

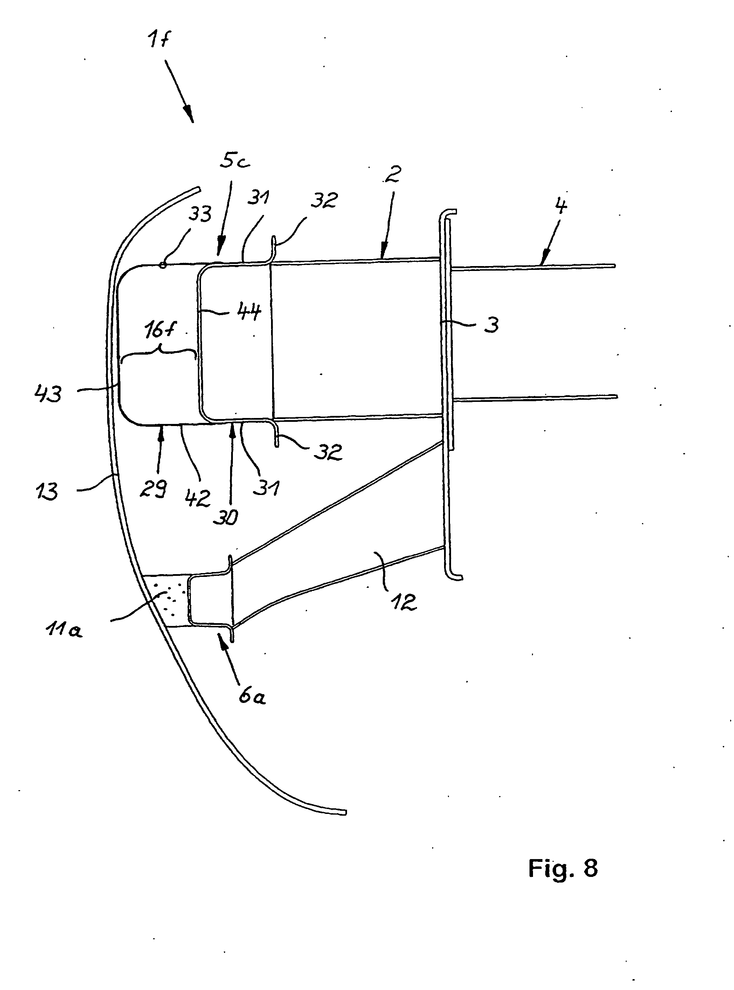

Die Stoßfängeranordnung le der Figur 7 sieht einen Querträger 5b aus einem rechteckigen Hohlprofil mit vertikaler Längsachse mit abgerundeten Ecken vor. In der der Verschalung 13 zugewandten Seitenwand 25 sind im Abstand nebeneinander mehrere rechteckige Ausnehmungen 26 vorgesehen. In diese Ausnehmungen 26 sind angepasste Schaumblöcke als Deformationsbereiche 16e mit niedrigem Kraftniveau eingesetzt, die einerseits mit der Verschalung 13 in Kontakt stehen und sich andererseits an der Innenfläche 27 der der Seitenwand 25 mit den Ausnehmungen 26 gegenüberliegenden Seitenwand 28 abstützen.

Unterhalb des Querträgers 5b befindet sich ein Querholm 6a entsprechend der Ausführungsform der Figur 6.

Aus der Figur 8 ist eine Stoßfängeranordnung 1f ersichtlich, bei welcher der Querträger 5c aus zwei aneinander gefügten, unterschiedliche Deformationsbereiche bildenden U-Profilen 29, 30 besteht. Das der Verschalung 13 benachbarte U-Profil 29 ist hierbei über seine Schenkel 42 mit dem der Verschalung 13 abgewandten U-Profil 30 gefügt, beispielsweise verschweißt. Dieses abgewandte U-Profil 30 weist außerdem an den Schenkeln 31 noch Flansche 32 auf. Das U-Profil 30 ist wiederum mit aus Hohlprofilen bestehenden Distanzkonsolen 2 gefügt. Der Deformationsbereich 16f mit dem niedrigen Kraftniveau wird durch eine dünnere Wand 33 des der Verschalung 13 benachbarten Profils 29 gebildet.

Unterhalb des Querträgers 5c befindet sich ein Querholm 6a entsprechend der Ausbildung der Figur 6.

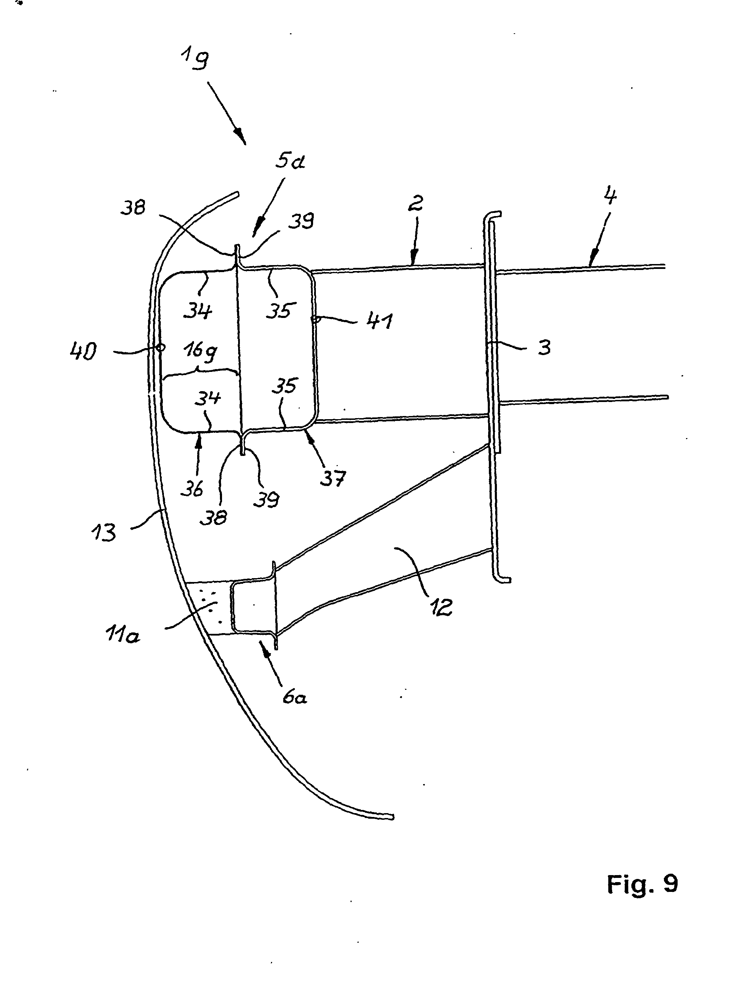

Bei der Ausführungsform einer Stoßfängeranordnung 1g gemäß Figur 9 besteht der Querträger 5d aus zwei mit ihren Schenkeln 34, 35 gegeneinander gerichteten und über die Schenkel 34, 35 zusammengefügten U-Profilen 36, 37. Dazu weisen die U-Profile 36, 37 noch Flansche 38, 39 auf. Der Deformationsbereich 16g mit dem niedrigen Kraftniveau ist durch das der Verschalung 13 benachbarte U-Profil 36 gebildet, und zwar dadurch, dass dessen Wand 40 dünner ist als die Wand 41 des der Verschalung 13 abgewandten U-Profils 37. Dieses ist mit den aus Hohlprofilen bestehenden Distanzkonsolen 2 gefügt.

Unterhalb des Querträgers 5d befindet sich ein Querholm 6a mit der Ausbildung der Figur 6.

Selbstverständlich ist es denkbar, dass statt der in den Figuren 6 bis 9 dargestellten Querholme 6a die in den Figuren 1 bis 5 veranschaulichten Querholme 6 zum Einsatz gelangen können.

Andererseits können bei den Ausführungsformen der Figuren 1 bis 5 statt der dort veranschaulichten Querholme 6 die Querholme 6a der Ausführungsformen der Figuren 6 bis 9 zum Einsatz gelangen.

### Bezugszeichenaufstellung

- 1 -: Stoßfängeranordnung
1a - Stoßfängeranordnung
1b - Stoßfängeranordnung
1c - Stoßfängeranordnung
1d - Stoßfängeranordnung
1e - Stoßfängeranordnung
1f - Stoßfängeranordnung
1g - Stoßfängeranordnung
- 2 -: Distanzkonsolen
- 3 -: Anschlagplatten
- 4 -: Längsträger
- 5 -: Querträger
5a - Querträger
5b - Querträger
5c - Querträger
5d - Querträge
- 6 -: Querholm
6a - Querholm
- 7 -: Steg v. 5
- 8 -: Schenkel v. 5
- 9 -: Flansche v. 5
- 10 -: Anschlagplatten
- 11 -: Schicht aus Schaum
11a - Schicht aus Schaum
- 12 -: Distanzstreben
- 13 -: Verschalung
- 14 -: Längssicke in 7
- 15 -: Fahrzeuglängsrichtung
- 16 -: Deformationsbereiche
16a - Deformationsbereiche
16b - Deformationsbereiche
16c - Deformationsbereiche
16d - Deformationsbereiche
16e - Deformationsbereiche
16f - Deformationsbereiche
16g - Deformationsbereiche
- 17 -: Wände v. 2
- 18 -: Schenkel v. 5a
- 19 -: Flansche an 18
- 20 -: Kanal v. 5a
- 21 -: Steg v. 6a
- 22 -: Schenkel v. 6a
- 23 -: Flansche v. 6a
- 24 -: Oberfläche v. 6
24a - Oberfläche v. 6a
- 25 -: Seitenwand v. 5b
- 26 -: Ausnehmungen in 25
- 27 -: Innenfläche v. 28
- 28 -: Seitenwand v. 5b
- 29 -: U-Profil v. 5c
- 30 -: U-Profil v. 5c
- 31 -: Schenkel v. 30
- 32 -: Flansche v. 30
- 33 -: Wand v. 29
- 34 -: Schenkel v. 36
- 35 -: Schenkel v. 37
- 36 -: U-Profil
- 37 -: U-Profil
- 38 -: Flansche v. 36
- 39 -: Flansche v. 37
- 40 -: Wand v. 36
- 41 -: Wand v. 37
- 42 -: Schenkel v. 29
- 43 -: Steg v. 29
- 44 -: Steg v. 30
- 45 -: Steg v. 5a

## Patentansprüche

1. Stoßfängeranordnung für den durch eine Verschalung (13) verkleideten Front- oder Heckbereich der Karosserie eines Personenkraftwagens, welche einen endseitig über Distanzkonsolen (2) und Anschlagplatten (3) mit den Längsträgern (4) der Karosserie verbundenen Querträger (5, 5a-d) sowie einen unterhalb des Querträgers (5, 5a-d) vorgesehenen Querholm (6, 6a) umfasst, **dadurch gekennzeichnet, daß** den Holm durch unter den Distanzkonsolen (2) angeordnete Distanzstreben (12) ebenfalls an den Anschlagplatten (3) abgestützt ist, wobei der Querträger (5, 5a-d) und/oder die Distanzkonsolen (2) mindestens bereichsweise in wenigstens zwei in Fahrzeuglängsrichtung (15) hintereinander liegende Deformationsbereiche mit unterschiedlichen Kraftniveaus gegliedert sind, wobei der Querholm (6, 6a) unterhalb der Distanzkonsolen (2) über schräg verlaufende Distanzstreben (12) mit den Anschlagplatten (3) verbunden ist.

2. Stoßfängeranordnung nach Anspruch 1, bei welcher der Querholm (6) rohrförmig ausgebildet ist.

3. Stoßfängeranordnung nach Anspruch 1, bei welcher der Querholm (6a) als Profildesign gestaltet ist.

4. Stoßfängeranordnung nach einem der Ansprüche 1 bis 3, bei welcher der Querholm (6, 6a) mindestens an den der Verschalung (13) zugewandten Oberflächenbereichen (24, 24a) mit einer Schicht (11, 11a) aus einem Energie absorbierenden Material versehen ist.

5. Stoßfängeranordnung nach einem der Ansprüche 1 bis 4, bei welcher die Distanzstreben (12) als Profildesign gestaltet sind.

6. Stoßfängeranordnung nach einem der Ansprüche 1 bis 4, bei welcher die Distanzstreben (12) als Hohlprofile ausgebildet sind.

7. Stoßfängeranordnung nach einem der Ansprüche 1 bis 6, bei welcher die Distanzkonsolen (2) aus Hohlprofilen bestehen und die Deformationsbereiche (16) mit dem niedrigen Kraftniveau durch Wellung der Wände (17) der Distanzkonsolen (2) gebildet sind.

8. Stoßfängeranordnung nach einem der Ansprüche 1 bis 6, bei welcher die Distanzkonsolen (2) aus Hohlprofilen bestehen und die Deformationsbereiche (16a) mit dem niedrigen Kraftniveau durch eine Reduzierung der Dicke der Wände (17) der Distanzkonsolen (2) gebildet sind.

9. Stoßfängeranordnung nach einem der Ansprüche 1 bis 6, bei welcher die Distanzkonsolen (2) aus Hohlprofilen bestehen und die Deformationsbereiche (16b) mit dem niedrigen Kraftniveau durch partielle Schwächung der Wände (17) der Distanzkonsolen (2) gebildet sind.

10. Stoßfängeranordnung nach einem der Ansprüche 1 bis 6, bei welcher die Distanzkonsolen (2) aus Hohlprofilen bestehen und die Deformationsbereiche (16c) mit dem niedrigen Kraftniveau durch Schaumkörper gebildet sind.

11. Stoßfängeranordnung nach einem der Ansprüche 1 bis 10, bei welcher die Deformationsbereiche (16, 16a-c) der Distanzkonsolen (2) mit dem niedrigen Kraftniveau benachbart zum Querträger (5) vorgesehen sind.

12. Stoßfängeranordnung nach einem der Ansprüche 1 bis 10, bei welcher die Deformationsbereiche (16, 16a-c) der Distanzkonsolen (2) mit dem niedrigen Kraftniveau benachbart zu den Anschlagplatten (3) vorgesehen sind.

13. Stoßfängeranordnung nach einem der Ansprüche 1 bis 12, bei welcher der Querträger (5) U-förmig ausgebildet und der der Verschalung (13) zugewandte Steg (7) mit einer Längssicke (14) versehen ist.

14. Stoßfängeranordnung nach einem der Ansprüche 1 bis 6, bei welcher der Querträger (5a) einen U-förmigen Querschnitt besitzt, dessen Schenkel (18) in Richtung zur Verschalung (13) weisen, wobei der Deformationsbereich (16d) mit dem niedrigen Kraftniveau durch einen in dem Kanal (20) des Querträgers (5a) gehaltenen, über die Schenkel (18) zur Verschalung (13) vorstehenden leistenartigen Schaumkörper gebildet ist.

15. Stoßfängeranordnung nach einem der Ansprüche 1 bis 6, bei welcher der Querträger (5b) in einem Rohrdesign ausgeführt ist, aus dem als Deformationsbereiche (16e) mehrere im Abstand nebeneinander angeordnete Schaumblöcke in Richtung zur Verschalung (13) vorstehen.

16. Stoßfängeranordnung nach einem der Ansprüche 1 bis 6, bei welcher der Querträger (5c) aus zwei aneinander gefügten U-Profilen (29, 30) besteht, deren Schenkel (42, 31) von den im Abstand zueinander angeordneten Stegen (43, 44) aus zur Fahrzeugmitte weisen, wobei das der Verschalung (13) benachbarte U-Profil (29) einen Deformationsbereich (16f) mit einem niedrigen Kraftniveau bildet.

17. Stoßfängeranordnung nach einem der Ansprüche 1 bis 6, bei welcher der Querträger (5d) aus zwei mit ihren Schenkeln (34, 35) gegeneinander gerichteten und über die Schenkel (34, 35) zusammengefügten U-Profilen (36, 37) besteht, von denen das der Verschalung (13) benachbarte U-Profil (36) als Deformationsbereich (16g) auf einem niedrigen Kraftniveau ausgebildet ist.

## Claims

1. Bumper arrangement for the front or rear end of the body of a motor car, the front or rear end being covered by a fairing (13), which bumper arrangement comprises a cross-member (5, 5a-d) which is connected at its ends to the longitudinal members (4) of the body via spacer brackets (2) and stop plates (3), and also a transverse spar (6, 6a) provided below the cross-member (5, 5a-d), **characterized in that** the spar is likewise supported on the stop plates (3) by means of spacer struts (12) arranged under the spacer brackets (2), the cross-member (5, 5a-d) and/or the spacer brackets (2) being subdivided, at least in certain regions, into at least two deformation regions having different force levels and located one behind the other in the vehicle longitudinal direction (15), the transverse spar (6, 6a) being connected below the spacer brackets (2) to the stop plates (3) via obliquely extending spacer struts (12).

2. Bumper arrangement according to Claim 1, in which the transverse spar (6) is of tubular design.

3. Bumper arrangement according to Claim 1, in which the transverse spar (6a) is designed as a profile.

4. Bumper arrangement according to one of Claims 1 to 3, in which the transverse spar (6, 6a) is provided, at least at the surface regions (24, 24a) directed towards the fairing (13), with a layer (11, 11a) of an energy-absorbing material.

5. Bumper arrangement according to one of Claims 1 to 4, in which the spacer struts (12) are designed as profiles.

6. Bumper arrangement according to one of Claims 1 to 4, in which the spacer struts (12) are designed as hollow profiles.

7. Bumper arrangement according to one of Claims 1 to 6, in which the spacer brackets (2) consist of hollow profiles and the deformation regions (16) with the lower force level are formed by corrugating the walls (17) of the spacer brackets (2).

8. Bumper arrangement according to one of Claims 1 to 6, in which the spacer brackets (2) consist of hollow profiles and the deformation regions (16a) with the lower force level are formed by reducing the thickness of the walls (17) of the spacer brackets (2).

9. Bumper arrangement according to one of Claims 1 to 6, in which the spacer brackets (2) consist of hollow profiles and the deformation regions (16b) with the lower force level are formed by partial weakening of the walls (17) of the spacer brackets (2).

10. Bumper arrangement according to one of Claims 1 to 6, in which the spacer brackets (2) consist of hollow profiles and the deformation regions (16c) with the lower force level are formed by foam bodies.

11. Bumper arrangement according to one of Claims 1 to 10, in which the deformation regions (16, 16a-c) of the spacer brackets (2) with the lower force level are provided adjacent to the cross-member (5).

12. Bumper arrangement according to one of Claims 1 to 10, in which the deformation regions (16, 16a-c) of the spacer brackets (2) with the lower force level are provided adjacent to the stop plates (3).

13. Bumper arrangement according to one of Claims 1 to 12, in which the cross-member (5) is of U-shaped design, and the web (7) directed towards the fairing (13) is provided with a longitudinal bead (14).

14. Bumper arrangement according to one of Claims 1 to 6, in which the cross-member (5a) has a U-shaped cross section, the arms (18) of which point in the direction of the fairing (13), the deformation region (16d) with the lower force level being formed by a strip-like foam body which is held in the channel (20) of the cross-member (5a) and protrudes beyond the arms (18) towards the fairing (13).

15. Bumper arrangement according to one of Claims 1 to 6, in which the cross-member (5b) is designed in the form of a tube from which there protrude, in the direction of the fairing (13), a plurality of foam blocks, forming deformation regions (16e), arranged next to and at a distance from one another.

16. Bumper arrangement according to one of Claims 1 to 6, in which the cross-member (5c) consists of two joined-together U-shaped profiles (29, 30), the arms (42, 31) of which point towards the centre of the vehicle from the webs (43, 44) arranged at a distance from one another, the U-shaped profile (29) adjacent to the fairing (13) forming a deformation region (16f) with a lower force level.

17. Bumper arrangement according to one of Claims 1 to 6, in which the cross-member (5d) consists of two U-shaped profiles (36, 37) which have their arms (34, 35) directed towards one another and are joined together by way of the arms (34, 35), and of which the U-shaped profile (36) adjacent to the fairing (13) is designed as the deformation region (16g) with a lower force level.

## Revendications

1. Ensemble pare-chocs pour la zone avant ou arrière, habillée d'une coque (13), de la carrosserie d'un véhicule automobile de tourisme, comprenant un support transversal (5, 5a-d) relié par les extrémités, au moyen de consoles d'espacement (2) et de platines de butée (3), aux longerons de support (4) de la carrosserie, ainsi qu'une traverse (6, 6a) prévue au-dessous dudit support transversal (5, 5a-d), **caractérisé par le fait que** la traverse est semblablement en appui contre les platines de butée (3) par l'intermédiaire d'entretoises d'espacement (12) disposées au-dessous des consoles d'espacement (2), le support transversal (5, 5a-d) et/ou les consoles d'espacement (2) étant scindé(es), au moins par zones, en au moins deux zones de déformation se succédant dans la direction longitudinale (15) du véhicule et présentant des niveaux de forces différents, la traverse (6, 6a) étant reliée aux platines de butée (3), au-dessous des consoles d'espacement (2), par l'intermédiaire d'entretoises d'espacement (12) s'étendant à l'oblique.

2. Ensemble pare-chocs selon la revendication 1, dans lequel la traverse (6) est de réalisation tubulaire.

3. Ensemble pare-chocs selon la revendication 1, dans lequel la traverse (6a) possède une configuration profilée.

4. Ensemble pare-chocs selon l'une des revendications 1 à 3, dans lequel la traverse (6, 6a) est munie, au moins dans les régions superficielles (24, 24a) tournées vers la coque (13), d'une couche (11, 11a) en un matériau absorbant l'énergie.

5. Ensemble pare-chocs selon l'une des revendications 1 à 4, dans lequel les entretoises d'espacement (12) possèdent une configuration profilée.

6. Ensemble pare-chocs selon l'une des revendications 1 à 4, dans lequel les entretoises d'espacement (12) sont réalisées sous la forme de profilés creux.

7. Ensemble pare-chocs selon l'une des revendications 1 à 6, dans lequel les consoles d'espacement (2) sont constituées par des profilés creux, et les zones de déformation (16) présentant le faible niveau de force sont matérialisées par une ondulation des parois (17) desdites consoles d'espacement (2).

8. Ensemble pare-chocs selon l'une des revendications 1 à 6, dans lequel les consoles d'espacement (2) sont constituées par des profilés creux, et les zones de déformation (16a) présentant le faible niveau de force sont matérialisées par une réduction de l'épaisseur des parois (17) desdites consoles d'espacement (2).

9. Ensemble pare-chocs selon l'une des revendications 1 à 6, dans lequel les consoles d'espacement (2) sont constituées par des profilés creux, et les zones de déformation (16b) présentant le faible niveau de force sont matérialisées par affaiblissement partiel des parois (17) desdites consoles d'espacement (2).

10. Ensemble pare-chocs selon l'une des revendications 1 à 6, dans lequel les consoles d'espacement (2) sont constituées par des profilés creux, et les zones de déformation (16c) présentant le faible niveau de force sont formées par des corps en mousse.

11. Ensemble pare-chocs selon l'une des revendications 1 à 10, dans lequel les zones de déformation (16, 16a-c) des consoles d'espacement (2), présentant le faible niveau de force, sont prévues au voisinage du support transversal (5).

12. Ensemble pare-chocs selon l'une des revendications 1 à 10, dans lequel les zones de déformation (16, 16a-c) des consoles d'espacement (2), présentant le faible niveau de force, sont prévues au voisinage des platines de butée (3).

13. Ensemble pare-chocs selon l'une des revendications 1 à 12, dans lequel le support transversal (5) est réalisé de configuration en U, et la membrure (7) tournée vers la coque (13) est munie d'une moulure longitudinale (14).

14. Ensemble pare-chocs selon l'une des revendications 1 à 6, dans lequel le support transversal (5a) possède une section transversale en U dont les branches (18) sont orientées en direction de la coque (13), la zone de déformation (16d), présentant le faible niveau de force, étant matérialisée par un corps en mousse du type listel retenu dans le canal (20) dudit support transversal (5a), et dépassant au-delà desdites branches (18) vers ladite coque (13).

15. Ensemble pare-chocs selon l'une des revendications 1 à 6, dans lequel le support transversal (5b) possède une configuration tubulaire au-delà de laquelle plusieurs blocs en mousse placés en juxtaposition à distance dépassent, en tant que zones de déformation (16e), en direction de la coque (13).

16. Ensemble pare-chocs selon l'une des revendications 1 à 6, dans lequel le support transversal (5c) est composé de deux profilés en U (29, 30) assemblés l'un à l'autre, dont les branches (42, 31) sont orientées vers le centre du véhicule à partir des membrures (43, 44) agencées avec distance mutuelle, sachant que le profilé en U (29), voisin de la coque (13), forme une zone de déformation (16f) présentant un faible niveau de force.

17. Ensemble pare-chocs selon l'une des revendications 1 à 6, dans lequel le support transversal (5d) est composé de deux profilés en U (36, 37) dirigés l'un vers l'autre par leurs branches (34, 35), assemblés par l'intermédiaire desdites branches (34, 35) et parmi lesquels le profilé en U (36), voisin de la coque (13), est réalisé sous la forme d'une zone de déformation (16g) assignée à un faible niveau de force.
